(19) Europäisches Patentamt
European Patent Office
Office européen des brevets

(11) **EP 4 429 391 A1**

(12) **EUROPEAN PATENT APPLICATION**

(43) Date of publication:
**11.09.2024   Bulletin 2024/37**

(21) Application number: **23160772.2**

(22) Date of filing: **08.03.2023**

(51) International Patent Classification (IPC):
**H04W 74/08** (2024.01)        **H04W 84/12** (2009.01)
**H04W 74/00** (2009.01)

(52) Cooperative Patent Classification (CPC):
**H04W 74/02; H04W 74/006; H04W 84/12**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Siemens Aktiengesellschaft
80333 München (DE)**

(72) Inventors:
• **Chongaroonngamsaeng, Chitiphat
11130 Nonthaburi Province (TH)**
• **Schneider, Ben
85748 Garching (DE)**
• **Bahr, Michael
81827 München (DE)**
• **Richerzhagen, Björn
85055 Ingolstadt (DE)**

(74) Representative: **Siemens Patent Attorneys
Postfach 22 16 34
80506 München (DE)**

(54)    **CONTROLLING ACCESS TO A RADIO NETWORK**

(57)    A method of controlling access to a radio network (1), the method comprising: Transmitting, by an access node (AP), a frame (2) for at least one terminal device (STA, STA1, STA2), wherein the frame (2) causes the terminal device (STA, STA1, STA2) to suspend contention-based access to the radio network (1) .

FIG 5

**Description**

TECHNICAL FIELD

The present disclosure relates to the field of wireless communication, in particular in an industrial system. The disclosure further relates to deterministic and/or real-time capable wireless communication.

BACKGROUND

In recent years, wireless communication has been widely adopted in the field of industrial systems. Compared with traditional wired control and monitoring systems, wireless control and/or monitoring systems as described herein are cost-effective and/or easy to deploy.

In such radio networks, different kinds of data traffic may have diverse real-time requirements. For example, the alarm traffic (emergency traffic) generated by a safety and/or emergency system should be transmitted with highest priority and/or a hard real-time guarantee.

However, a delay may be present which causes latency when transmitting data. For example, in the CSMA/CA based medium access, all stations in a radio range contend for transmission resources. If a transmission of a station experiences multiple backoff procedures, it may result in a high probability of suffering a long delay when accessing the medium. An overview of delay-sensitive applications, where the timeliness is of vital issue and transmission protocol adaptations to be considered is provided in Y. Cheng, D. Yang, H. Zhou und H. Wang, "Adopting IEEE 802.11 MAC for industrial delay-sensitive wireless control and monitoring applications: A survey," Computer Networks, p. 27, 2019.

SUMMARY

It is hence an object to improve the delay of a transmission, in particular when accessing the medium. It is a further object to provide deterministic access to a radio network, e.g., in order to initiate a scheduled transmission.

The object is achieved by the subject-matter of the independent claims. Advantageous embodiments are provided in the dependent claims and are described herein.

BRIEF DESCRIPTION OF THE DRAWINGS

| Figure 1 | illustrates channel access mechanisms according to Wi-Fi 5 (and before). |
| Figure 2 | illustrates channel access mechanisms according to Wi-Fi 6. |
| Figure 3 | illustrates channel access mechanisms allowing deterministic channel access. |
| Figure 4 | shows an illustration of an access point and two stations. |
| Figure 5 | shows a sequence diagram comprising the transmission of frames for suspending contention-based access to the radio network. |
| Figure 6 | shows an exemplary MU-EDCA parameter set. |
| Figure 7 | shows the transmission of a BSRP frame for suspending contention-based access to the radio network. |
| Figure 8 | illustrates access delays for different access control types. |
| Figure 9 | shows different frame types. |
| Figure 10 to 20 | show exemplary method steps. |

DETAILED DESCRIPTION

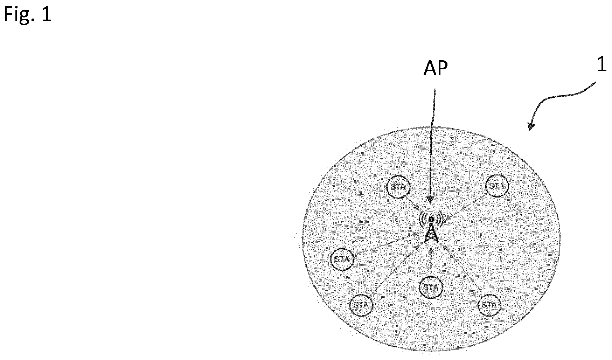

Figures 1, 2 and 3 show the conceptual differences between Wi-Fi 5, i.e., IEEE 802.11ac, (and before) and Wi-Fi 6, i.e., 802.11ax, channel access, medium access or access mechanisms.

In Figure 1 the distributed approach for Wi-Fi 5 and before is illustrated. Therein, the channel access is based on listen-before-talk (or Carrier Sense Multiple Access / Collision Avoidance (CSMA/CA)). For a transmission, the stations, STAs, (including the AP) can individually try to access the medium. If a station, STA, finds the medium to be idle for a specific amount of time, the STA starts a transmission using the complete sub-channel they are assigned to. This mechanism is also known as Distributed Coordination Function (DCF). DCF was extended with the Enhanced Distributed Channel Access (EDCA) mechanism that introduced priorities to Wi-Fi in the form of 4 Access Categories (Voice, Video, Background, and Best-Effort). The main goal was to be able to optimize average performance (e.g., latency and jitter) for multi-media traffic.

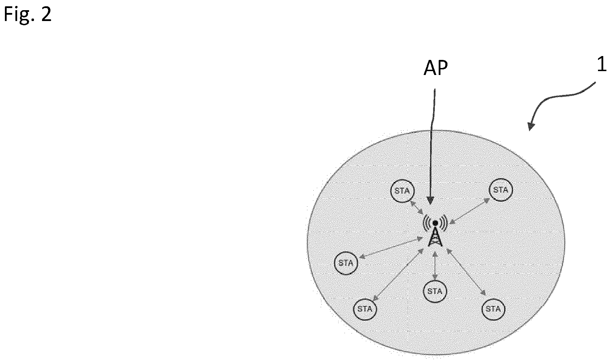

Wi-Fi 6 brings two major advantages. The first being a new 6GHz frequency band which can be used by Wi-Fi 6 capable stations and beyond. However, the new 6GHz frequency band is not available for pre-Wi-Fi 6 stations. This means that for now, only Wi-Fi 6 STAs will be using the 6 GHz band, hence no backwards compatibility issues have to be taken care of in this band. The second major advantage of Wi-Fi 6 compared to legacy Wi-Fi is the use of Orthogonal Frequency Division Multiple Access (OFDMA). With OFDMA, the access point, AP, controls allocation, i.e., allocates, the sub-channel resources, i.e., Resource Units - RUs, more efficiently than for Wi-Fi 5 and earlier Wi-Fi versions. For that, the AP has to contend for the medium (using EDCA, as EDCA is one of the default channel access mechanisms in modern Wi-Fi networks) before centrally performing frequency allocation as shown in Figure 2. No matter whether a downlink (DL) or uplink (UL) OFDMA transmission should happen, the first thing to happen is the AP winning contention against associated STAs, compared to pre-Wi-Fi 6 where STAs could initiate an UL transmission on their own and block the whole channel, as shown in Figure 1. Thus, Figure 2 shows a Wi-Fi or WLAN that consists of Wi-Fi 6 and pre-Wi-Fi 6 STAs i.e., OFDMA transmissions can be initiated by the AP as well as the typical distributed access can be performed by the STAs.

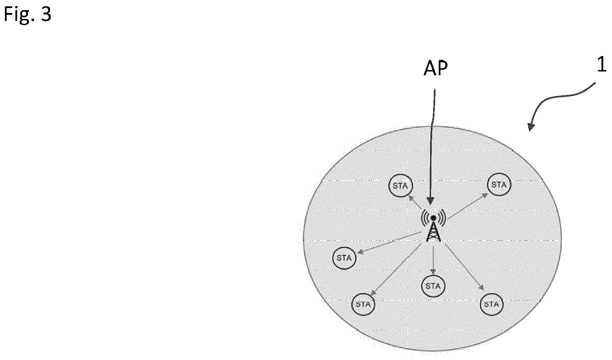

Figure 3 illustrates an access mechanism allowing deterministic medium access, channel access or access, e.g., to a radio network, in general. Here, the AP is able to centrally perform frequency allocation since the STAs are suspended from accessing the channel/medium. Therefore, the AP can perform deterministic (channel/medium) access in order to initiate a scheduled transmission. The AP can thus access the channel/medium within a predictable, e.g., maximum, time. The one or more stations STA associated with the AP are thus (at least temporarily) not allowed to contend for the medium and/or to perform contention-based access to the radio network, in particular to access the medium or the access channel, for example to perform a transmission to the access node, such as said access point AP.

This results in the AP (always) winning contention and thus being able to initiate a transmission, e.g., OFDMA uplink or downlink transmission. The STAs are thus blocked from channel/medium access, i.e., in the uplink. However, these "blocked" STAs will not starve, as the AP may still allocate resources for UL transmissions, e.g., using OFDMA, of the one or more stations STA and/or thus may even be more efficient than if the one or more stations STA would have done blocking the medium/channel, e.g., using the legacy (MU-)EDCA mechanism. As there are no STAs in the radio network that contend for the channel/medium, the channel/medium access time of an AP (and thus the transmission(s) of the one or more stations, e.g., scheduled by the access point) becomes predictable and/or deterministic.

It should be understood that instead of a station STA a terminal device, such as a user equipment, UE, may be used. Furthermore, instead of an access point an access node, such as a base station, may be used. Still further, instead of a Wi-Fi network 1 a radio network such as mobile radio network, e.g., according to 3GPP Release 18, 17, 16, 15, 14, 13, 12, 11, 10, 9 and/or 8, may be used. In any case any other access node of a radio network and/or terminal device in said radio network may be used, e.g., that employs contention-based access such as, carrier sense multiple access with collision avoidance, CSMA/CA, and/or carrier sense multiple access with collision detection, CSMA/CD.

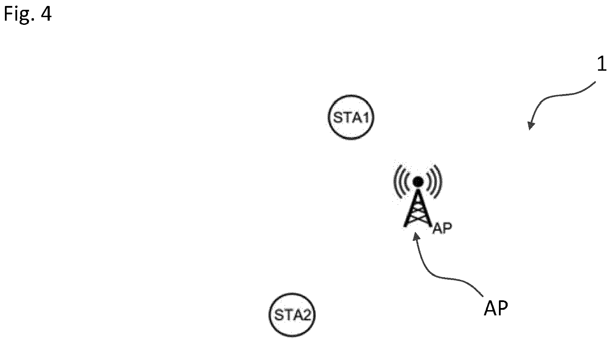

Figure 4 shows an illustration of an access point AP and two stations STA1, STA2.

The one or more stations STA1, STA2 start out as not authenticated and/or associated to the access point, AP. A station STA1, STA2 and the access point AP will exchange a series of management frames, e.g., according to IEEE 802.11ac or 802.11ax, in order to get to an authenticated and associated state, i.e., the station STA1, STA2 being associated to the access point AP.

Three possible connection states, for example according to 802.11ac/ax, are: Not authenticated or associated; Authenticated but not yet associated; Authenticated and associated.

A station STA1, STA2 can actively or passively scan for a radio network 1 such as a wireless network.

A station STA1, STA2 may for example send a probe request to discover a radio network 1 within its proximity. Thereupon a probe response may be sent by the AP advertising the SSID (wireless network name), supported data rates, encryption types if required, and/or other 802.11ac/ax capabilities of the AP. The station STA1, STA2 may then send an authentication frame to the AP. The AP receives the authentication frame and/or responds to the station STA1, STA2 with an authentication frame set. At this point the station STA1, STA2 is authenticated but not yet associated.

If an AP receives any frame other than an authentication or probe request from a station STA1, STA2 that is not authenticated it will respond with a deauthentication frame placing the station STA1, STA2 into an unauthenticated and/or unassociated state.

A station STA1, STA2 can be authenticated to multiple APs however it may only be (actively) associated to a single AP (at a time). Multi-connectivity however is considered in IEEE 802.11be / Wi-Fi 7, i.e., a station could then be allowed to actively connect to multiple access points.

The station STA1, STA2 then sends an association request to the AP. The association request may contain an encryption type and/or other compatible 802.11ac/ax capabilities. The AP may then send a success message granting radio network access to the station STA1, STA2.

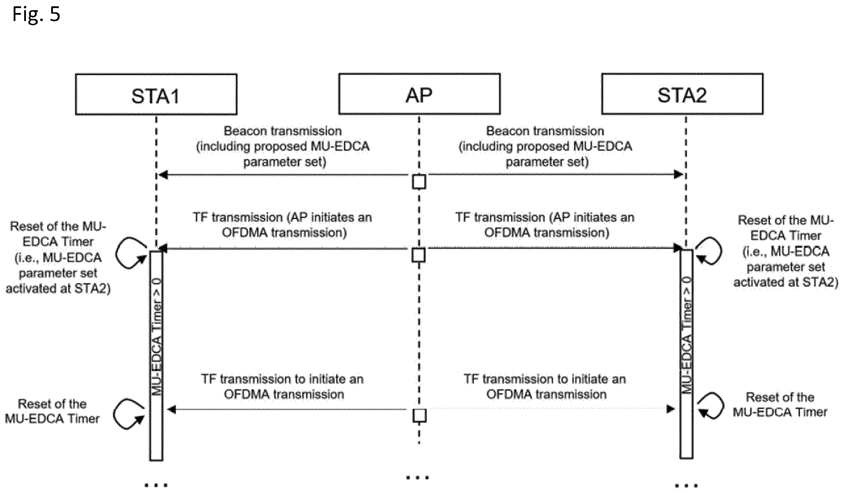

Alternatively, a station STA1, STA2 may passively scan for an access point AP. To that end, the station STA1, STA2 listens on beacon frames that the AP periodically sends in each channel to obtain AP information. Such a beacon frame, e.g., as shown in Figure 5, may contain information including the SSID and/or supported data rate of the AP.

Hence, the station STA1, STA2 may be associated with the access point AP.

Now, access mechanisms, to the channel/medium and/or the radio network, e.g., in Wi-Fi, may operate based on distributed mechanisms (Distributed Coordination Function (DCF) and/or Enhanced Distributed Channel Access (EDCA)) and/or in a listen-before-talk mode, such as CSMA/CA. EDCA is a mechanism that is optimized for high throughput and average latency, but not for deterministic and/or worst-case transmission delays. In particular, industrial applications require deterministic and/or real-time capable wireless communication, with guaranteed medium/channel access. Industrial applications may be based on polling-based or TDMA-based mechanisms with high implementation complexity which are typically not IEEE 802.11ac/ax compliant, i.e., proprietary solutions. For example in Wi-Fi 6, using Orthogonal Frequency Division Multiple Access (OFDMA), employs a paradigm shift from distributed channel access to centrally controlled, i.e. scheduled, transmissions. That is, the AP is always in control of initiating OFDMA transmissions in UL and DL direction using IEEE 802.11ax compliant so called Trigger Frames. However, as IEEE 802.11 networks are backwards compatible, an 802.11ax network has to support both central and distributed media access mechanisms. To cope with this paradigm shift, the IEEE developed a new multi-user (MU) extension for EDCA in Wi-Fi 6 / IEEE 802.11ax called MU-EDCA. MU-EDCA is designed to reduce the average channel/medium access time of an access point when competing against associated IEEE 802.11ax STAs during channel access. MU-EDCA reduces the average channel/medium access time of an AP. However, it is currently not capable of guaranteeing worst-case medium/channel access delays which are required for in industrial solutions.

Originally, EDCA introduced four Access Categories, AC, for prioritizing multi-media traffic, e.g., voice and video, over Best-Effort traffic. Each of the four ACs has a separate set of EDCA parameters called Wireless Multi Media, WMM, parameter set.

MU-EDCA as introduced with IEEE 802.11ax allows the AP to adjust channel/medium access parameters of one or more stations and to use another EDCA parameter set called MU-EDCA parameter set. The MU-EDCA parameter set may be distributed (similar to the WMM parameter set) via one or more Beacon Frames. As described herein, the MU-EDCA parameter set may serve as a first access configuration, and the EDCA (WMM) parameter set may serve as a second access configuration.

The MU-EDCA parameter set is meant to downgrade the medium/channel access probabilities of stations using EDCA, as they usually require longer arbitration inter-frame spacings, AIFS, and contention window(s) than the parameters of the EDCA (WMM) parameter set.

The MU-EDCA parameter set is supposed to be activated after a successful UL OFDMA transmission and will last for a duration specified by an MU-EDCA parameter, i.e., the MU-EDCA Timer 4.

Thus, using MU-EDCA, the access point AP can reduce the probability of a station, e.g., that just performed an UL transmission to access the channel, in the near future again. However, the current MU-EDCA mechanism does not guarantee a worst-case channel/medium access time for the access point AP, which is required for deterministic channel/medium access, i.e., wireless communication, but optimizes average channel/medium access performance in favor of the access point AP.

Turning to Figure 5, a sequence diagram illustrating the transmission of one or more frames for suspending contention-based access (of one or more terminal devices, such as said stations) to the radio network. The terminal devices, here station(s) STA1, STA2, may be associate to an access node, such as the access point AP, e.g., according to the mechanism detailed in connection with Figure 4.

A beacon frame is one of the management frames in IEEE 802.11ac/ax based radio network, therein referred to as Wi-FI or WLAN. The beacon frame contains (all the) information about the radio network. Beacon frames may be transmitted periodically, they serve to announce the presence of an access point AP, i.e., a WLAN, and/or for synchronization. Beacon frames may be transmitted by the access point (AP), for example in an infrastructure basic service set (BSS).

The beacon frame(s) may serve for distributing the MU-EDCA parameter set (similar to the WMM parameter set). The beacon frame(s) may thus contain the MU-EDCA parameter set.

When a station STA1, STA2 receives a beacon frame, it thus receives information about the capabilities and/or configuration of that radio network. The station STA1, STA2 may then be configured according to the MU-EDCA parameter set obtained. Thereby, any preexisting MU-EDCA parameter set may be replaced.

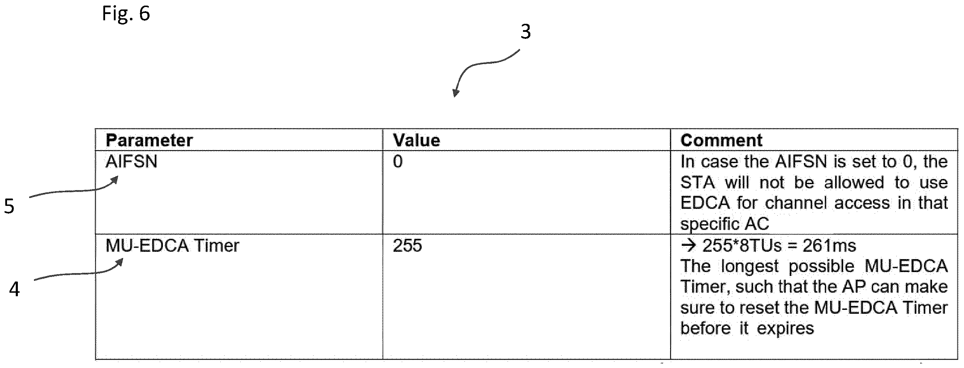

The MU-EDCA parameter set (which may be applied for all 4 EDCA Access Categories (AC)) may comprise the parameters and/or parameter values as shown in Figure 6.

The MU-EDCA parameter set may comprise the parameters AIFSN and MU-EDCA Timer. As shown in Figure 6, the AIFSN is set to 0, and therefore the station STA1, STA2 will not be allowed to use EDCA, i.e., the EDCA parameter set, for channel/medium access, e.g., in a specific AC. The MU-EDCA Timer is set to a value, e.g., to the longest possible MU-EDCA Timer, such that the access point AP can make sure to reset the MU-EDCA Timer before it expires. The timer reset can be caused by the transmission of frames by the AP - as described herein.

This MU-EDCA parameter set allows for disabling the EDCA-based channel/medium access for the station(s) STA1, STA2 and allows the access point AP to win the contention-based access.

Returning to Figure 5, for example after transmission of a beacon frame, the access point AP may transmit a frame that causes stations to suspend contention-based access to the radio network. This frame TF, when received by the station(s) STA1, STA2, will cause the station(s) STA1, STA2 to reset its/their MU-EDCA Timer. Thus, the MU-EDCA Timer of a station STA1, STA2 shall be reset when the AP sends or transmits a frame, e.g., a Trigger Frame, TF, in particular one or more specific kind(s) of Trigger Frames TF, to the one or more stations STA1, STA2, for example instead of and/or in addition to the reset of the MU-EDCA timer at the end of a successful UL OFDMA transmission, for example as defined in IEEE 802.11ax.

As the access point AP controls transmission of these frames, which may also be referred to as suspension frame(s), to the stations STA1, STA2, it can now control when and/or how often the stations STA1, STA2 reset its/their MU-EDCA Timer. The access point AP can thus reset the timer before it expires, such that the station or stations STA1, STA2 will always be using the first access configuration, e.g., the parameter set proposed in Figure 6, and thus not be able to use a second access configuration, e.g., according to EDCA, i.e., the EDCA (WMM) parameter set, for a transmission.

As all associated stations STA1, STA2 (or at least a subset thereof) may receive these frame(s) from the AP, the timer, specifically the MU-EDCA Timer, will be reset for all associated STAs (or at least a subset thereof) - and not only for STAs that participated in an UL OFDMA transmission immediately before.

The proposed mechanism, i.e., modification to the MU-EDCA mechanism, thus does not allow associated stations STA1, STA2 to contend for the channel/medium. This results in the access point AP (always) winning contention and thus being able to initiate/schedule an, e.g., OFDMA, uplink and/or downlink transmission for the, preferably associated, stations STA1, STA2. Overall, the proposed approach can be considered as a way of blocking one or more stations STA1, STA2 from channel/medium access, e.g., in the uplink. However, these blocked one or more stations STA1, STA2 will be able to perform transmission, as the access point AP is still going to allocate resources for, e.g., UL transmissions of the stations STA1, STA2, e.g., using OFDMA (even more efficiently than if the stations STA1, STA2 would have done blocking the channel/medium using the legacy EDCA mechanism, e.g., in OFDM-based transmissions).

Thus, since now there are no stations STA1, STA2 (or a reduced number of stations) in the radio network that contend for the channel/medium (given that the 6GHz band and/or the MU-EDCA parameter set, e.g., as shown in Figure 6, is enabled), the channel/medium access time of an access point AP and/thus also the transmissions of the one or more stations STA1, STA2 becomes predictable/deterministic.

The access AP will thus win contention against its associated stations STA1, STA2, e.g., according to multi-user EDCA, MU-EDCA, introduced with IEEE 802.11ax / Wi-Fi 6.

In a radio network that consists of IEEE 802.11ax-compliant stations only (e.g., in the 6GHz band), MU-EDCA may be used to increase the probability of the access point AP winning medium/channel access against the stations STA1, STA2.

The MU-EDCA parameters may at first not be available to the one or more the stations, i.e., may not be stored, e.g., in a memory of a station. The MU-EDCA parameters may be sent or transmitted by the AP in a beacon and thus stored on and/or activated by the one or more stations, e.g., as soon as a UL OFDMA transmission was successful. However, it may be more flexible to send or transmit MU-EDCA parameters with one or more control frames (e.g., trigger frames TF). This allows to adapt the first access configuration faster, e.g., than with a beacon frame that is only sent every 100ms by default. A further aspect is the permanent activation of the first access configuration, e.g., said MU-EDCA parameter (set), based on a reset of a timer, e.g., said MU-EDCA timer, preferably for the one or more stations STA1, STA2, e.g., associated with an access point AP. The reset may be controlled by the transmission of one or more frames, e.g., trigger frames TF, by the access point, or access node in general. This frame or frame type may also be referred to as suspension frame as it suspends the contention-based access of the terminal device (to the radio network).

Instead or in addition to the MU-EDCA parameters being included in the beacon frame, the MU-EDCA parameters present in the station may be used and/or activated by a flag in a frame, such as the beacon frame. Thus, a flag, e.g., in the form of one or more bits in the beacon frame may be transmitted by AP. For instance, a flag in a Capabilities Information Element (IE) of a beacon frame may be used. This flag will indicate to the associated STAs to use and/or active the MU-EDCA parameters or MU-EDCA parameter (set), e.g., according to Figure 6. In addition, the frame containing such an indication, e.g., in the form of said flag mentioned, may cause the MU-EDCA timer of the station(s) to be reset.

Furthermore, a flag in a frame sent by the AP, for instance, a flag in the Common Info field in a frame, e.g., a BSRP frame, may be used for causing the station(s) to use and/or active the MU-EDCA parameter(s) and/or to reset the MU-EDCA Timer. This flag may indicate to the station(s) that receive the BSRP to the use the (modified) MU-EDCA parameters and/or to reset the MU-EDCA Timer.

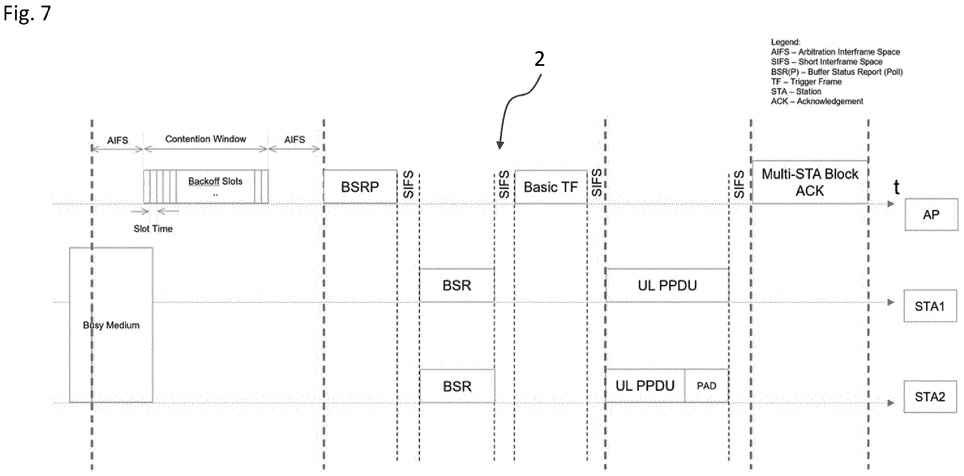

Turning to Figure 7 an embodiment comprising the transmission of a first frame, such as a BSRP frame, and/or a second frame, such as a Basic Trigger Frame, for suspending contention-based access to the radio network is shown. Again, as before, two stations STA1, STA2 associated with an access point AP are shown.

It is proposed to reset the MU-EDCA Timer when one or more stations, STAs, receive a frame such as a Buffer Status Report Poll, BSRP, frame from the access point, AP. The BSRP frame is a frame type that is standardized by IEEE 802.11ax. The BSRP frame has been chosen, as it is a vital part of an UL OFDMA transmission. Its purpose is that the AP can query associated STAs using the BSRP frame for traffic they have buffered. STAs answer a BSRP with a Buffer Status Report, BSR, frame which contains information of packets that the station(s) want to send to the AP, such as payload size or QoS requirements of buffered data traffic. Hence, the BSRP is usually used in most of the UL OFDMA transmissions.

As shown in Figure 7, the channel/medium may be busy at first, i.e., one or more stations transmitting and/or receiving traffic, e.g., in the form of one or more (data) frames, according to their channel and/or resource units allocated by the access point. Following upon such a busy medium is a contention window during which contention-based access and/or corresponding access attempts of the stations STA1, STA2 and/or the access point AP may take place. However, due to the successful UL transmission the MU-EDCA parameter set of the station(s) STA1, STA2 is activated. This MU-EDCA parameter set will last, i.e., be activated, a duration specified by the MU-EDCA Timer. The MU-EDCA parameter set is meant to downgrade the medium/channel access probabilities of STAs using MU-EDCA, as they usually require longer AIFS(N) and Contention Window than the parameters of the EDCA (WMM) parameter set, as described herein. Hence, the station(s) STA1, STA2 do not perform a contention-based access in the following contention window in line with their MU-EDCA parameter set values.

Thereupon, the AP gains access to the medium and transmits a BSRP frame, preferably comprising new MU-EDCA parameter set, and/or corresponding parameter values, e.g., the ones shown in Figure 6. The one or more station(s) STA1, STA2 respond (after receiving) the BSRP frame with a BSR frame. As shown, an SIFS may lie between the BSRP frame and the BSR frame. For example, after another SIFS, the access point may transmit a second type of frame, e.g., a control frame, such as a basic trigger frame, denoted as Basic TF in Figure 7, that causes the station(s) STA1, STA2 to suspend contention-based access, e.g., by resetting the MU-EDCA timer in the MU-EDCA parameter set.

Accordingly, the access point may schedule transmission (opportunities) for the station(s) STA1, STA2. That is to say, the access point AP may allocate transmission resources for a station STA1, STA2 or a plurality of stations, preferably based on the at least one buffer status report frames received. As shown, the transmission opportunities and the transmission resources relate to UL PPDU transmission. Hence, the station(s) may transmit one or more frames in the uplink, UL, comprising Physical Protocol Data Unit(s), PPDU, preferably, according to the transmission resources allocated by the access point, e.g., based on the buffer status report from the station(s) STA1, STA2. As shown the access point AP may then acknowledge the reception of the PPDU transmitted by the station(s).

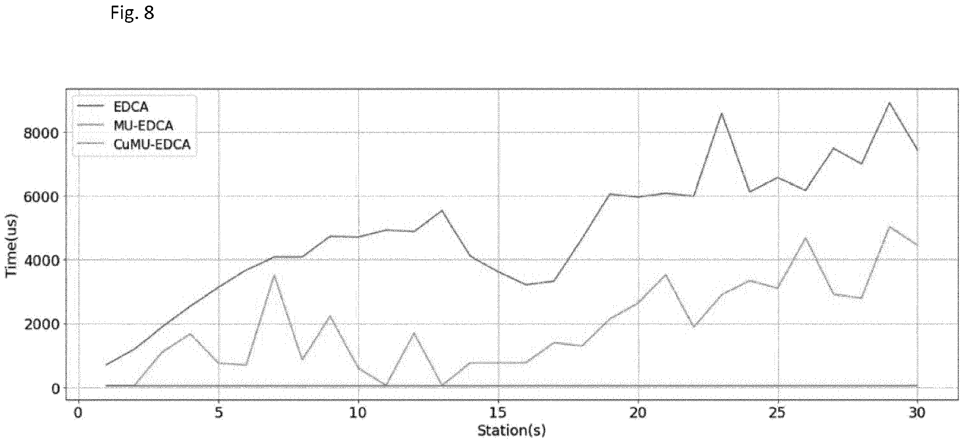

Figure 8 illustrates access delay for different access control types. The access delay is given as in time units of us. Therein the worst-case channel access delays for EDCA, MU-EDCA; and the MU-EDCA PARAMETER SET AND MODIFIED MECHANISM, CuMU-EDCA, as proposed herein are illustrated.

As can be seen the access time or access delay increases with the number of stations when EDCA or standard MU-EDCA is used, whereas the access time or access delay stays constant when the modified mechanism as proposed herein is employed, i.e., when the access point transmits frames that cause the stations to suspend the contention-based channel access.

With changing the configuration of the MU-EDCA parameters in favor of the AP and modifying the MU-EDCA mechanism as proposed herein, a worst-case channel access time for the AP of maximum 55ps can be achieved. Figure 8 shows a comparison of the worst-case channel access times of an AP for standard-compliant EDCA (upper curve), MU-EDCA (middle curve) and the modified version of MU-EDCA (called CuMU-EDCA; lower, flat line curve).

An IEEE 802.11ax network with up to 30 STAs has been simulated in order to arrive at the curves shown in Figure 8. The worst-case channel/medium access delay of an AP can be calculated as follows:

$$\mathtt{Delay\ =\ SIFS\ +\ (AIFSN\ +\ CW)\ *\ ST}$$

where: Delay = channel access delay, SIFS = Short Inter-frame Space, AIFSN = Arbitration Inter-frame Space Number, CW = Contention Window, ST = Slot Time.

For the simulation of a Wi-Fi 6 scenario, this results in maximum of 55ps as the worst-case channel/medium access time for the AP:

$$\mathtt{Delay\ =\ SIFS\ +\ (AIFSN\ +\ CW)\ *\ ST\ =\ 10\mu s + (2 + 3)\ *\ 9\mu s\ =\ 55\mu s}$$

An alternative realization is to reset the MU-EDCA Timer when the one or more stations, STAs, receive a Basic Trigger Frame sent by the AP. Basic TFs are mandatory for each UL OFDMA transmission, as they are used to synchronize the starting times of an UL OFDMA data transmission (i.e., one SIFS after the Basic TF, the STAs start sending their UL PPDUs simultaneously on their allocated RUs). However, as Basic TFs are mandatory for every UL OFDMA transmission, the MU-EDCA Timer might be reset more frequently than necessary.

Polling-based mechanisms for (semi-)deterministic channel access in radio networks, such as Wi-Fi, already exist (e.g, Point Coordination Function (PCF) or the Hybrid Coordination Function (HCF) Controlled Channel Access (HCCA) or even proprietary products like iWLAN that used a modified version of PCF called industrial PCF).

With the new OFDMA directions in Wi-Fi 6 and beyond, Wi-Fi develops into a more AP centric communication technology (similar as the adoption of OFDMA in the cellular 5G technology). Hence, the aspects and embodiments proposed herein may be applied to the mobile radio networks, e.g., according to 4G, 5G, or 6G specification.

The proposed new solution modifies an existing medium or channel access mechanism, in particular MU-EDCA, to achieve deterministic channel access (delays), particularly in OFDMA-based Wi-Fi (802.11) networks. The major advantages are a reduced, predictable and/or deterministic medium/channel access (delays) for, e.g., OFDMA-based, transmissions in uplink and/or downlink direction. Another advantage is that is easy to implement the proposed modification to the existing MU-EDCA mechanism in Wi-Fi 6.

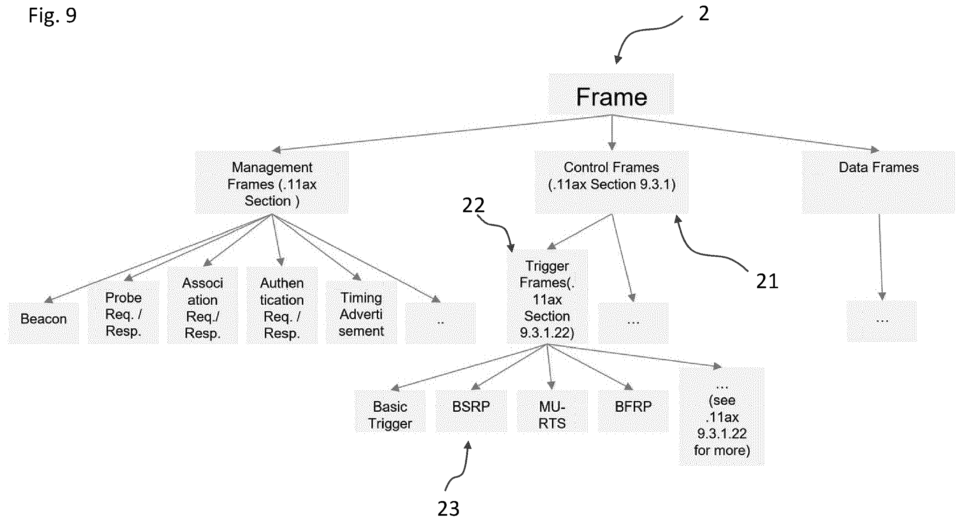

Figure 9 shows different frame types. Frames of these frame types or frame format may be used to suspend the channel-based access of one or more terminal devices, such as said station(s) discussed herein. As the case may be, one or more frames, preferably transmitted and/or received by the terminal device(s), may be used to suspend the contention-based access. These frames may therefore be referred to suspension frames.

Three frame types, i.e., management, control, and data frames, according to of 802.11 are shown in Figure 9. Management frames are used to manage the basic service set, BSS, control frames control access to the medium, and data frames contain payloads, e.g., comprising information for applications and protocols, such as higher level layers 3-7.

In particular, one or more management frames, i.e., of the management frame type or format, such as Probe Request and/or Probe Response, Association Request and/or Association Response, Authentication Request and/or Authentication Response, Timing Advertisement may be used.

Furthermore, additionally or alternatively, one or more control frames, i.e., of the control frame type or format, such as one or more Trigger Frames may be used. In particular, one or more Basic Trigger frames, one or more Buffer Status Report Poll Trigger frames, one or more MU-RTS Trigger frames, one or more Beamforming Report Poll Trigger frames may be used. Further frame type or frame formats are provided in section 9.3.1.22 of IEEE Std 802.11ax-2020 and in the amendment IEEE Std 802.11ax-2021.

Finally, additionally or alternatively, one or more data frames may be used in order to may be used to suspend the channel-based access of one or more terminal devices, such as said station(s) discussed herein.

A station, or a terminal device in general, may be operative and/or configured to suspend contention based access upon or after receiving such a suspension frame.

All 802.11ac/ax frames fall under one of the three types: management, control, or data. A frame may comprise a header which in turn comprises a frame control field that contains the values for type and subtype of the frame. The type field indicates management, control, or data frames. The subtype field indicates the specific type of management, control, or data frame. One type of a management frame is a beacon (frame), that is transmitted by the access point, e.g., in regular intervals. A beacon frame may contain the configuration of the radio network, such as a WLAN, including whether it supports standards such as 802.11k, 802.11r, the required cipher suites and authentication key management (AKM) methods, whether protection mechanisms are required, etc., as described herein.

As such the management frame, e.g., said beacon frame, may contain a MU-EDCA parameter set, for example as shown in Figure 6 and/or may cause the terminal device(s) to suspend the contention-based access to the radio network.

The control frame may be a request-to-send (RTS) and/or clear-to-send (CTS) frame. A control frame may be used control access to the medium and/or for frame acknowledgement. Control frames may only contain a header and trailer, i.e., no body. Thus, a combination of management frame and control frame is possible to suspend contention-based access to the radio network for one or more terminal devices. That is, at first a management frame is transmitted and subsequently a control frame is transmitted in order to suspend contention-based access, i.e., to cause the terminal device to suspend contention-based access to the radio network. In any case, a combination of control frames may also be used to, at first, inform the terminal device with an first access configuration and/or active the first access configuration and/or to suspend the contention-based access of the terminal device, e.g. by resetting a timer of the terminal device.

Finally, data frames may be used to transfer information or trigger an event. As such also data frame(s) may be used to suspend contention-based access, i.e., to cause the terminal device to suspend contention-based access to the radio network, e.g., by resetting the timer of the terminal device. Not all data frames contain a payload, some are "null data frames" and only contain a header and trailer. For example, one or more broadcast or multicast frames may be transmitted by the access point to suspend contention-based access, i.e., to cause the terminal device to suspend contention-based access to the radio network, i.e. accessing the medium/channel.

It should be understood that for exemplary purposes a system with an access point and stations according IEEE 802.11ax were described but that the teachings disclosure herein are applicable to other radio or wireless systems, in particular those employing contention-based access.

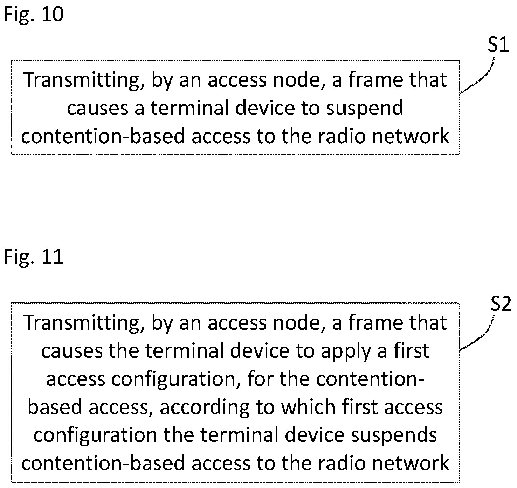

Turning to Figure 10 an exemplary method step S1 is shown. In a step S1, an access node may transmit a frame that causes a terminal device to suspend contention-based access to the radio network. AS already mentioned, such a frame may be referred to as a suspension frame. In particular the terminal device may suspend contention-based access to an access node, e.g., an access point, of the radio network. Hitherto the terminal device may be associated with the access node or access point, e.g., as described herein. The frame may be any one of the frames as described herein in particular with respect to Figure 9. The access node may transmit the frame for a terminal device to be received either by way of a beacon or a broadcast or multicast. In any case, the frame may be destined for one or more or all terminal devices (associated with the access node). As such the frame may comprise a destination address which corresponds to the address of the one or more terminals for which the frame is destined. The transmission allows the access node to control access to a radio network.

Turning to Figure 11 an exemplary method step S2 is shown. In a step S2, the access node may transmit a frame that causes the terminal device to apply a first access configuration, for the contention-based access, according to which first access configuration the terminal device suspends contention-based access to the radio network. The first access configuration may comprise one or more parameters according to which the contention-based access is performed. For example, the first access configuration may correspond to an MU-EDCA parameter set as described herein.

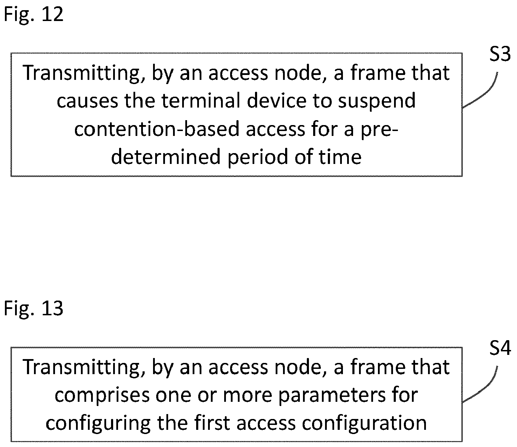

Turning to Figure 12 an exemplary method step S3 is shown. In a step S3, the access node may transmit a frame that causes the terminal device to suspend contention-based access for a predetermined period of time.

Turning to Figure 13 an exemplary method step S4 is shown. In a step S4, the access node may transmit a frame that causes a timer of the terminal device to be reset, wherein based upon expiration of the timer the terminal device resumes contention-based access to the radio network. The timer may run in the terminal device.

Upon expiration of the timer the terminal device may resume contention-based access according to a second access configuration. The second access configuration (for the contention-based access) may also be stored in the terminal device. The second access configuration may correspond to the EDCA parameter set, also known as and referred to as the WMM parameter set.

Turning to Figure 13 an exemplary method step S4 is shown. In a step S4, the access node may transmit a frame that comprises one or more parameters for configuring the first access configuration, such as said MU-EDCA parameter set. The parameters comprised in the frame may be or may serve for configuring the first access configuration, e.g., a parameter such as an AIFSN and/or an MU-EDCA timer.

As described herein, the timer of the terminal device is initiated and/or (re-)set after a successful contention-based access of the terminal device. During the runtime of the timer the terminal device(s) thus relies upon the first access configuration for performing contention-based access. In particular, the first access configuration may prohibit contention-based access to the radio network, in particular during the runtime of the timer. Alternatively the first access configuration may comprise setting with an extended backoff period that deteriorate a probability of contention-based access, e.g. by a high AISFN setting. The second access configuration is employed by the terminal device(s) when the timer expires or runs out. Usually, the second access configuration will allow a contention-based access to the radio network. As described herein, the timer is (re-)initiated or (re-)set after a successful contention-based access and/or transmission of the terminal device. Thereby, the first access configuration is used by the terminal device for accessing the radio network, reducing the chances of an immediate medium access by the terminal device.

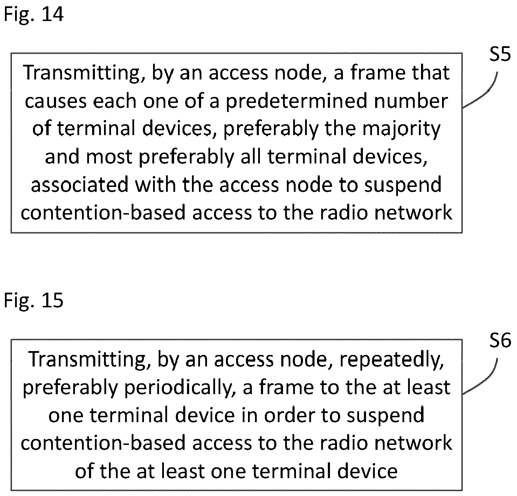

Turning to Figure 14 an exemplary method step S5 is shown. In a step S5, the access node may transmit a frame that causes each one of a predetermined number of terminal devices, preferably the majority and most preferably all terminal devices, associated with the access node to suspend contention-based access to the radio network. As the case may be, the one or more terminal devices for which the timer is to be reset may be determined by the access node or another network function. Subsequently, the access node may transmit said frame to be received by the terminal devices, e.g., as a management frame and/or a control frame. Hence by resetting the timer of at least some of the terminal devices, i.e., by suspending the contention-based access of those terminal devices, associated with the access point, the probability of the access point winning the contention-based access is increased.

Turning to Figure 15 an exemplary method step S6 is shown. In a step S6, the access node may repeatedly, preferably periodically, transmit a frame to the at least one terminal device in order to suspend contention-based access to the radio network of the at least one terminal device. Said repetition may be period as in the case of beacon frames that are transmitted according to a beacon period or interval, e.g., every 102.4 ms.

It should be understood that it may be the same frame that is transmitted by the access node that comprises the properties described in connection with any one of the Figure 10-15 and/or that causes the terminal device to perform the acts described herein. In any case, it may nonetheless be separate frames with the properties described in connection with Figures 10-15 that are transmitted by the access node.

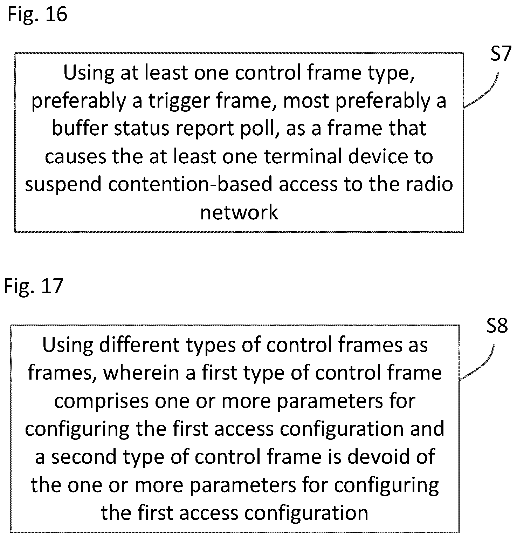

Turning to Figure 16 an exemplary method step S7 is shown. In a step S7, at least one control frame type, preferably a trigger frame, most preferably a buffer status report poll, is used as a frame that causes the at least one terminal device to suspend contention-based access to the radio network, e.g., as described herein.

Turning to Figure 17 an exemplary method step S8 is shown. In a step S8, different types of control frames may be used as said frames, wherein a first type of control frame comprises one or more parameters for configuring the first access configuration, e.g., said MU-EDCA parameter set, and a second type of control frame is devoid of, i.e., does not comprise, the one or more parameters for configuring the first access configuration. As mentioned earlier, and even more general, the first frame may be a management frame such as a beacon frame and the second frame may be a control frame such as a trigger frame such as a Basic Trigger Frame.

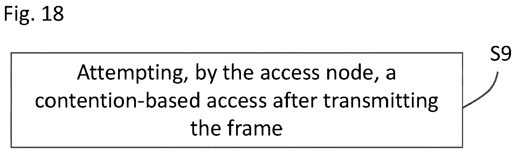

Turning to Figure 18 an exemplary method step S9 is shown. In a step S9, the access node may attempt a contention-based access after transmitting the frame. That is the access node is guaranteed to succeed in accessing the medium or at least the chances are improved dependent on the specific embodiment chosen as described herein.

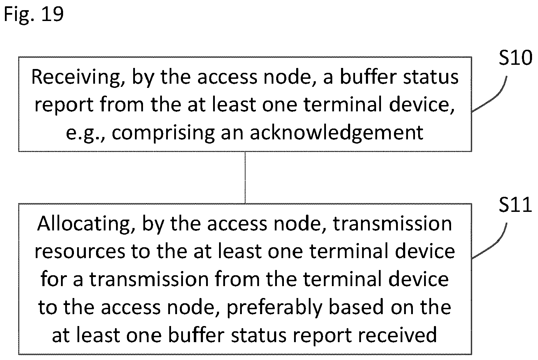

Turning to Figure 19 exemplary method steps S10 and S11 are shown. In a step S10, the access node may receive a buffer status report from the at least one terminal device, e.g., comprising an acknowledgement. This may be for example the case if a BSRP frame is used to suspend contention-based access of the terminal device and/or to reset the timer (in the first access configuration) of the terminal device and/or to transmit the first access configuration to the terminal device.

Subsequently, in a step S11 the access node may allocate transmission resources to the at least one terminal device for a transmission from the terminal device to the access node, preferably based on the at least one buffer status report received.

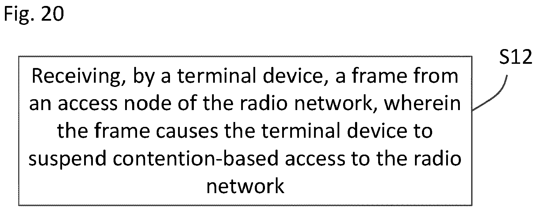

Turning to Figure 20 an exemplary method step S12 is shown. In a step S12, a terminal device may receive a frame from an access node of the radio network, wherein the frame causes the terminal device to suspend contention-based access to the radio network. The frame may be a frame comprising any one of the properties as described herein in particular in connection with Figures 10-19. It should also be understood that the steps described in connection with Figures 10-20 may be combined in order to obtain a sequence of successive steps.

**Claims**

1. A method of controlling access to a radio network (1), the method comprising:
   Transmitting, by an access node (AP), a frame (2) for at least one terminal device (STA, STA1, STA2), wherein the frame (2) causes the terminal device (STA, STA1, STA2) to suspend contention-based access to the radio network (1).

2. The method according to the preceding claim,
   wherein the frame (2) causes the terminal device (STA, STA1, STA2) to apply a first access configuration (3), for the contention-based access, according to which first access configuration (3) the terminal device (STA, STA1, STA2) suspends contention-based access to the radio network (1).

3. The method according to any one of the preceding claims, wherein the frame (2) causes the terminal device (STA, STA1, STA2) to suspend contention-based access for a predetermined period of time.

4. The method according to any one of the preceding claims, wherein the frame (2) causes a timer (4) of the terminal device (STA, STA1, STA2) to be reset, wherein based upon expiration of the timer (4) the terminal device (STA, STA1, STA2) resumes contention-based access to the radio network (1).

5. The method according to any one of the preceding claims, wherein upon expiration of the timer (4) the terminal device (STA, STA1, STA2) resumes contention-based access according to a second access configuration.

6. The method according to any one of the preceding claims, wherein the frame (2) comprises one or more parameters (4, 5) for configuring the first access configuration (3), in particular for configuring an AIFSN and/or an MU-EDCA timer.

7. The method according to any one of the preceding claims, wherein the timer (4) of the terminal device (STA, STA1, STA2) is initiated and/or reset after a successful contention-based access of the terminal device (STA, STA1, STA2).

8. The method according to any one of the preceding claims, wherein the frame (2) causes each one of a predetermined number of terminal devices (STA, STA1, STA2), preferably the majority and most preferably all terminal devices, (STA, STA1, STA2) associated with the access node (AP) to suspend contention-based access to the radio network (1).

9. The method according to any one of the preceding claims, repeatedly, preferably periodically, transmitting the frame (2) to the at least one terminal device (STA, STA1, STA2) in order to suspend contention-based access to the radio network (1) of the at least one terminal device (STA, STA1, STA2).

10. The method according to any one of the preceding claims, Using at least one control frame type (21), preferably a trigger frame (22), most preferably a buffer status report poll (23), as a frame (2) that causes the at least one terminal device (STA, STA1, STA2) to suspend contention-based access to the radio network (1).

11. The method according to any one of the preceding claims, Using different types of control frames (21) as frames, wherein a first type of control frame (22) comprises one or more parameters for configuring the first access configuration (3), and a second type of control frame (22) is devoid of the one or more parameters for configuring the first access configuration (3).

12. The method according to any one of the preceding claims, Attempting, by the access node (AP), a contention-based access after transmitting the frame (2).

13. The method according to any one of the preceding claims, Receiving, by the access node (AP), a buffer status report from the at least one terminal device (STA, STA1, STA2), e.g., comprising an acknowledgement.

14. The method according to any one of the preceding claims, Allocating, by the access node (AP), transmission resources to the at least one terminal device (STA, STA1, STA2) for a transmission from the terminal device (STA, STA1, STA2) to the access node (AP), preferably based on the at least one buffer status report received.

15. An access node (AP) of a radio network (1), preferably comprising a processor and a memory, operative to perform the method steps of any one of the preceding claims.

16. A method of controlling access to a radio network (1), the method comprising:
Receiving, by a terminal device (STA, STA1, STA2), a frame (2) from an access node (AP) of the radio network (1), wherein the frame (2) causes the terminal device (STA, STA1, STA2) to suspend contention-based access to the radio network (1).

17. A terminal device (STA, STA1, STA2) of a radio network (1), preferably comprising a processor and a memory, operative to perform the method steps of the preceding claim.

Fig. 1

Fig. 2

Fig. 3

EP 4 429 391 A1

Fig. 4

Fig. 5

Fig. 6

EP 4 429 391 A1

| Parameter | Value | Comment |
|---|---|---|
| AIFSN | 0 | In case the AIFSN is set to 0, the STA will not be allowed to use EDCA for channel access in that specific AC |
| MU-EDCA Timer | 255 | → 255*8TUs = 261ms<br>The longest possible MU-EDCA Timer, such that the AP can make sure to reset the MU-EDCA Timer before it expires |

Fig. 7

Legend:
AIFS – Arbitration Interframe Space
SIFS – Short Interframe Space
BSR(P) – Buffer Status Report (Poll)
TF – Trigger Frame
STA – Station
ACK – Acknowledgement

Fig. 8

EP 4 429 391 A1

Fig. 9

**Frame** — 2

- Management Frames (.11ax Section )
  - Beacon
  - Probe Req. / Resp.
  - Association Req./ Resp.
  - Authentication Req. / Resp.
  - Timing Advertisement
  - ..
- Control Frames (.11ax Section 9.3.1) — 21
  - Trigger Frames(.11ax Section 9.3.1.22) — 22
    - Basic Trigger
    - BSRP — 23
    - MU-RTS
    - BFRP
    - ... (see .11ax 9.3.1.22 for more)
  - ...
- Data Frames
  - ...

EP 4 429 391 A1

Fig. 10

S1

Transmitting, by an access node, a frame that causes a terminal device to suspend contention-based access to the radio network

Fig. 11

S2

Transmitting, by an access node, a frame that causes the terminal device to apply a first access configuration, for the contention-based access, according to which first access configuration the terminal device suspends contention-based access to the radio network

EP 4 429 391 A1

Fig. 12

Transmitting, by an access node, a frame that causes the terminal device to suspend contention-based access for a pre-determined period of time — S3

Fig. 13

Transmitting, by an access node, a frame that comprises one or more parameters for configuring the first access configuration — S4

EP 4 429 391 A1

Fig. 14

> Transmitting, by an access node, a frame that causes each one of a predetermined number of terminal devices, preferably the majority and most preferably all terminal devices, associated with the access node to suspend contention-based access to the radio network

S5

Fig. 15

> Transmitting, by an access node, repeatedly, preferably periodically, a frame to the at least one terminal device in order to suspend contention-based access to the radio network of the at least one terminal device

S6

EP 4 429 391 A1

Fig. 16

| |
|---|
| Using at least one control frame type, preferably a trigger frame, most preferably a buffer status report poll, as a frame that causes the at least one terminal device to suspend contention-based access to the radio network |

S7

Fig. 17

| |
|---|
| Using different types of control frames as frames, wherein a first type of control frame comprises one or more parameters for configuring the first access configuration and a second type of control frame is devoid of the one or more parameters for configuring the first access configuration |

S8

Fig. 18

S9

Attempting, by the access node, a contention-based access after transmitting the frame

Fig. 19

Receiving, by the access node, a buffer status report from the at least one terminal device, e.g., comprising an acknowledgement — S10

Allocating, by the access node, transmission resources to the at least one terminal device for a transmission from the terminal device to the access node, preferably based on the at least one buffer status report received — S11

EP 4 429 391 A1

Fig. 20

Receiving, by a terminal device, a frame from an access node of the radio network, wherein the frame causes the terminal device to suspend contention-based access to the radio network

S12

Europäisches
Patentamt

European
Patent Office

Office européen
des brevets

# EUROPEAN SEARCH REPORT

**Application Number**

EP 23 16 0772

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | NARIBOLE SHARAN ET AL: "Impact of MU EDCA Channel Access on IEEE 802.11ax WLANs", 2019 IEEE 90TH VEHICULAR TECHNOLOGY CONFERENCE (VTC2019-FALL), IEEE, 22 September 2019 (2019-09-22), pages 1-5, XP033648603, DOI: 10.1109/VTCFALL.2019.8891575 [retrieved on 2019-11-04] | 1-6, 8-10, 12-17 | INV. H04W74/08 ADD. H04W84/12 H04W74/00 |
| A | * abstract * * page 1, col.1-2, section I. Introduction; figure 1 * * page 2, col.1, section II 802.11ax OFDMA Operation – A. Uplink OFDMA * | 7,11 | |
| X | US 2021/351864 A1 (CHENG WAN-JIE [TW] ET AL) 11 November 2021 (2021-11-11) | 1,7-17 | |
| A | * abstract * * paragraphs [0072] – [0086]; figure 4 * | 3-6 | |
| X | US 2019/254072 A1 (BARON STÉPHANE [FR] ET AL) 15 August 2019 (2019-08-15) | 1-6,8,9, 12-17 | **TECHNICAL FIELDS SEARCHED (IPC)** |
| A | * abstract * * paragraphs [0223] – [0227] * * paragraphs [0320] – [0354]; figure 11 * * paragraphs [0354] – [0358]; figure 12 * | 7 | H04W |

The present search report has been drawn up for all claims

| Place of search | Date of completion of the search | Examiner |
|---|---|---|
| Munich | 20 July 2023 | Möll, Hans-Peter |

EPO FORM 1503 03.82 (P04C01)

## ANNEX TO THE EUROPEAN SEARCH REPORT
## ON EUROPEAN PATENT APPLICATION NO.

EP 23 16 0772

This annex lists the patent family members relating to the patent documents cited in the above-mentioned European search report.
The members are as contained in the European Patent Office EDP file on
The European Patent Office is in no way liable for these particulars which are merely given for the purpose of information.

20-07-2023

| Patent document cited in search report | Publication date | Patent family member(s) | Publication date |
|---|---|---|---|
| US 2021351864 A1 | 11-11-2021 | TW 202143774 A | 16-11-2021 |
| | | US 2021351864 A1 | 11-11-2021 |
| US 2019254072 A1 | 15-08-2019 | BR 112019006764 A2 | 02-07-2019 |
| | | CN 109845381 A | 04-06-2019 |
| | | CN 115734383 A | 03-03-2023 |
| | | CN 115884429 A | 31-03-2023 |
| | | CN 115968049 A | 14-04-2023 |
| | | EP 3530055 A1 | 28-08-2019 |
| | | EP 3902365 A1 | 27-10-2021 |
| | | ES 2882499 T3 | 02-12-2021 |
| | | GB 2555142 A | 25-04-2018 |
| | | JP 6772377 B2 | 21-10-2020 |
| | | JP 7005720 B2 | 24-01-2022 |
| | | JP 7269385 B2 | 08-05-2023 |
| | | JP 2020500457 A | 09-01-2020 |
| | | JP 2021005893 A | 14-01-2021 |
| | | JP 2022033298 A | 28-02-2022 |
| | | JP 2023083493 A | 15-06-2023 |
| | | KR 20190065399 A | 11-06-2019 |
| | | KR 20210018521 A | 17-02-2021 |
| | | KR 20210077801 A | 25-06-2021 |
| | | KR 20220119532 A | 29-08-2022 |
| | | RU 2718958 C1 | 15-04-2020 |
| | | RU 2020112508 A | 15-05-2020 |
| | | SG 11201903196X A | 30-05-2019 |
| | | US 2019254072 A1 | 15-08-2019 |
| | | US 2021051721 A1 | 18-02-2021 |
| | | US 2023113934 A1 | 13-04-2023 |
| | | WO 2018073171 A1 | 26-04-2018 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **Y. CHENG ; D. YANG ; H. ZHOU ; H. WANG.** Adopting IEEE 802.11 MAC for industrial delay-sensitive wireless control and monitoring applications: A survey. *Computer Networks,* 2019, 27